Europäisches Patentamt

European Patent Office

Office européen des brevets

(11) Veröffentlichungsnummer: **0 307 705**
**A1**

## (12) EUROPÄISCHE PATENTANMELDUNG

(21) Anmeldenummer: 88114067.7

(22) Anmeldetag: 29.08.88

(51) Int. Cl.⁴: **G21C 3/32**

(30) Priorität: **10.09.87 DE 3730460**

(43) Veröffentlichungstag der Anmeldung:
**22.03.89 Patentblatt 89/12**

(84) Benannte Vertragsstaaten:
**DE ES FR GB IT SE**

(71) Anmelder: **Siemens Aktiengesellschaft Berlin und München**
**Wittelsbacherplatz 2**
**D-8000 München 2(DE)**

(72) Erfinder: **Lettau, Hans, Dipl.-Ing.(FH)**
**Lettenfeld 14**
**D-8521 Effeltrich(DE)**
Erfinder: **Lili, Günther, Dr.**
**Händelstrasse 10**
**D-8522 Herzogenaurach(DE)**
Erfinder: **Lippert, Hans-Joachim**
**Am Galgenberg 17**
**D-8552 Höchstadt/Aisch(DE)**
Erfinder: **Rink, Roland**
**Marktplatz 10**
**D-8742 Bad Königshofen(DE)**

(54) **Kernreaktor-Brennelement.**

(57) Ein Kernreaktor-Brennelement mit einem langgestreckten Brennelement-Kasten (5), einem Wasserrohr (4) und Kernbrennstoff enthaltenden Brennstäben (7) in diesem Brennelement-Kasten (5) hat einen Längssteg (10) innerhalb des Brennelement-Kastens (5), mit dem eine Kastenseite mit einer ihr gegenüberliegenden Kastenseite verbunden ist, der an diesen beiden Kastenseiten befestigt ist, der Abstand von anderen Kastenseiten hat und der in zwei Teilstege (10) längsgeteilt ist, von denen jeder außen am Wasserrohr (4) befestigt ist.

FIG 1

EP 0 307 705 A1

## Kernreaktor-Brennelement

Die Erfindung betrifft ein Kernreaktor-Brennelement nach dem Oberbegriff des Patentanspruchs 1.

Ein derartiges Kernreaktor-Brennelement ist aus der europäischen Patentanmeldung 0 224 728 bekannt. Dieses bekannte Kernreaktor-Brennelement ist für einen Siedewasser-Kernreaktor bestimmt.

Der Brennelement-Kasten hat rechteckigen bzw. quadratischen Querschnitt und führt im Siedewasser-Kernreaktor einen Kühlmittelstrom an den Brennstäben des Kernreaktor-Brennelementes entlang. An seiner Außenseite führt der Brennelement-Kasten im Siedewasser-Kernreaktor Steuerstäbe, die einen kreuzförmigen Querschnitt haben und von denen sich jeweils einer im Zwischenraum zwischen den Brennelement-Kästen von vier Kernreaktor-Brennelementen befinden, die in den Ecken einer rechteckigen bzw. quadratischen Masche eines Kerngitters im Siedewasser-Kernreaktor angeordnet sind.

Innerhalb des Brennelement-Kastens wird während des Betriebes im Siedewasser-Kernreaktor Wasserdampf erzeugt, so daß der Druck innerhalb des Brennelement-Kastens den Druck auf der Außenseite des Brennelement-Kastens erheblich übersteigen kann. Dies führt zu einer elastischen und plastischen Aufweitung eines zu dünnwandig ausgeführten, in der Regel aus einer Zirkoniumlegierung bestehenden Brennelement-Kastens, wodurch die Freigängigkeit des Steuerstabes behindert wird. Üblich sind daher heute Brennelement-Kästen mit einer Wandstärke von 2 bis 3 mm.

Der Erfindung liegt die Aufgabe zugrunde, geringere Wandstärken für den Brennelement-Kasten zu ermöglichen, ohne daß eine unzulässig hohe elastische oder plastische Aufweitung des Kastens während des Betriebes im Siedewasser-Kernreaktor in Kauf genommen werden muß.

Zur Lösung dieser Aufgabe hat ein Kernreaktor-Brennelement der eingangs erwähnten Art erfindungsgemäß die Merkmale des kennzeichnenden Teiles des Patentanspruchs 1.

Der Längssteg hat also Abstand von anderen Kastenseiten, die sich zwischen den beiden Kastenseiten befinden, an denen der Längssteg befestigt ist. Die beiden sich gegenüber befindlichen Kastenseiten werden daher durch den Längssteg zusammengehalten, so daß die Aufweitung des Brennelement-Kastens auch dann in Grenzen bleibt, wenn seine Wandstärke z.B. kleiner als 2 mm ist. Durch die verringerte Wandstärke wird ein vergrößerter Durchtrittsquerschnitt für das Kühlmittel im Brennelement-Kasten erzielt, was eine Verbesserung der Kühlung der Brennstäbe und/oder einer Erhöhung des Querschnitts der Kernbrennstoff-Säule in den Brennstäben des Kernreaktor-Brennelementes zuläßt und damit eine Verbesserung der Wirtschaftlichkeit des Brennstoff-Kreislaufes bewirkt. Auch absorbieren Brennelement-Kästen mit verringerter Wandstärke in verringertem Umfang thermische Spaltneutronen im Siedewasser-Kernreaktor und verbessern so dessen Reaktivität.

Patentanspruch 2 und 3 sind ist auf eine vorteilhafte Weiterbildung des Kernreaktor-Brennelementes gerichtet, durch die eine besondere mechanische Stabilität erzielt wird.

Aus der britischen Patentschrift 942 323 ist zwar ein Kernreaktor-Brennelement mit einem quadratischen Brennelementkasten bekannt, in dem sich eine Reihe sich kreuzender Stege befinden, die jeweils an sich gegenüber befindlichen Kastenseiten befestigt sind, es handelt sich jedoch um ein Kernreaktor-Brennelement für einen Kernreaktor, in dessen Kern sich eine organische Flüssigkeit als Kühlmittel und Moderator und kein Wasserdampf befindet. Das bekannte Kernreaktor-Brennelement weist auch kein Wasserrohr auf. Die Stege dienen lediglich zum Halten von Brennstäben bzw. gitterförmigen Abstandhaltern im Brennelementkasten, einem Aufweiten des Brennelementkastens brauchen sie nicht entgegenzuwirken.

Aus der europäischen Patentanmeldung 0 099 322 sind ferner abgewinkelte Blechstege im quadratischen Brennelementkasten eines Kernreaktor-Brennelementes bekannt; diese Blechstege sind aber nicht an gegenüberliegenden, sondern an benachbarten Seiten des Brennelementkastens befestigt. Deshalb bilden die Blechstege zwar einen Wasserkanal mit kreuzförmigem Querschnitt im Brennelementkasten, einem Aufweiten des Brennelementkastens wirken aber auch sie nicht entgegen.

Die Erfindung und ihre Vorteile sind anhand der Zeichnung und Ausführungsbeispielen näher erläutert:

FIG 1 zeigt in perspektivischer Ansicht und teilweise in Explosionsdarstellung das Skelett eines erfindungsgemäßen Kernreaktor-Brennelementes,

FIG 2 und 3 zeigen schematisch je einen Querschnitt einer anderen Ausführungsform des erfindungsgemäßen Kernreaktor-Brennelementes.

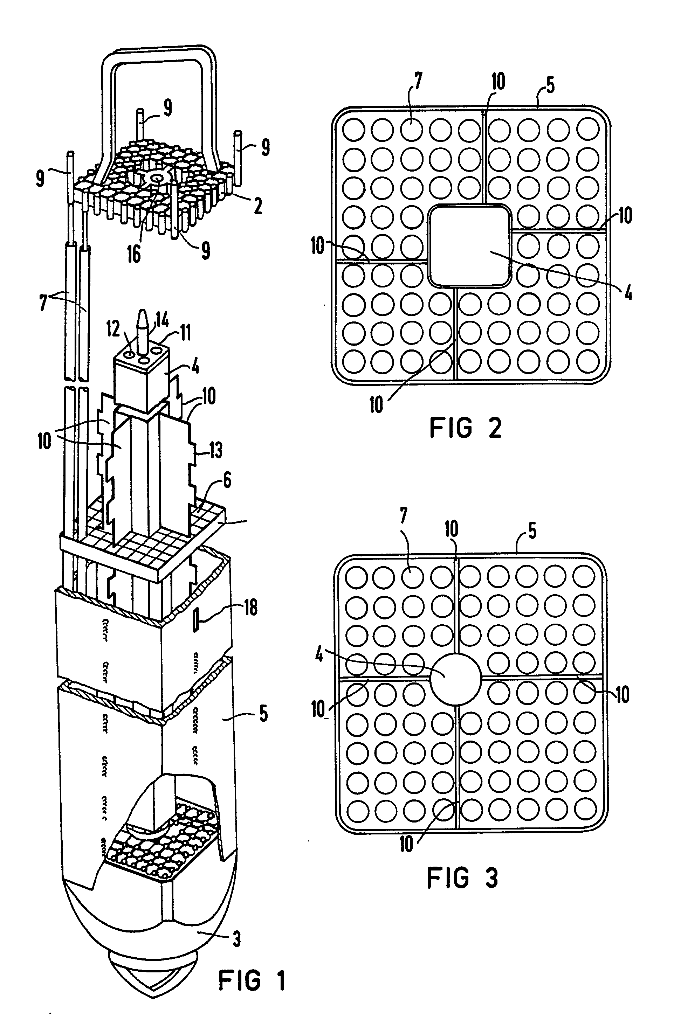

Das Kernreaktor-Brennelement nach FIG 1 weist einen Brennelementkopf 2 und einen Brennelementfuß 3 jeweils mit rechteckigem, hier quadratischem Querschnitt, ein langgestrecktes Wasserrohr 4 mit rechteckigem, hier quadratischem Querschnitt und einen langgestreckten Brennelement-Kasten 5 ebenfalls mit rechteckigem, hier quadratischem Querschnitt auf. Das Wasserrohr 4 ist mittig in gitterförmigen Abstandhaltern 6 angeordnet, die sich innerhalb des Brennelement-Kastens 5 befinden und - in Längsrichtung des Wasserrohres 4 gesehen - Abstand voneinander haben. Durch jede Masche dieser Abstandhalter 6 greift ein Kernbrennstoff enthaltender Brennstab 7. Beispielsweise sind acht dieser Brennstäbe 7 sogenannte Tragestäbe, die an beiden Enden Gewindebolzen haben, mit denen sie am Brennelementkopf 2 mit einer nicht dargestellten Mutter und am Brennelementfuß 3 direkt festgeschraubt sind. Die anderen Brennstäbe 7 greifen lose mit an ihren beiden Enden befindlichen Bolzen in Durchführungen im Brennelementkopf 2 und Brennelementfuß 3. Alle Brennstäbe 7 sind jeweils mit einer auf Druck vorgespannten, nicht dargestellten Schraubenfeder fixiert, die auf den Gewindebolzen bzw. Bolzen auf der Innenseite des Brennelementkopfes 2 sitzen und sich an dieser Innenseite und am betreffenden Brennstab 7 abstützen.

Während Brennelementkopf 2 und Brennelementfuß 3 aus rostfreiem Stahl bestehen, ist der langgestreckte Brennelement-Kasten 5 aus einer Zirkoniumlegierung gefertigt. Er ist an beiden Enden offen und ist mit einem Ende über den Brennelementkopf 2 und mit dem anderen Ende über den Brennelementfuß 3 gestülpt. Der Brennelementkasten 5 umfaßt also den Brennelementkopf 2 und den Brennelementfuß 3. Am Oberende weist der Brennelementkasten 5 innen an den Ecken nicht dargestellte Blechstreifen auf, die am Oberende von Stehbolzen 9 an der Oberseite des Brennelementkopfes 2 festgeschraubt sind.

Das Wasserrohr 4 mit rechteckigem bzw. quadratischem Querschnitt besteht ebenfalls aus einer Zirkoniumlegierung. Die Seiten seines Querschnitts sind parallel zur jeweils benachbarten Seite des Querschnitts des Brennelement-Kastens 5. Die Stege der Abstandhalter 6 durchsetzen sich rechtwinklig und sind ebenfalls zu jeweils zwei zueinander parallelen Seiten des Querschnitts des Wasserrohres 4 parallel. Alle Seiten des Querschnitts des Wasserrohres 4 haben von der jeweils benachbarten Seite des Querschnitts des Brennelement-Kastens 5 gleichen Abstand.

Jeweils an zwei sich gegenüberliegenden zueinander parallelen Seiten des Wasserrohres 4 sind außen zwischen zwei Abstandhaltern 6 bzw. zwischen einem Abstandhalter 6 und dem Brennelementkopf 2 oder dem Brennelementfuß 3 zwei Teilstege 10 aus einer Zirkoniumlegierung mit einer Längskante festgeschweißt. Zueinander parallele Teilstege 10, deren Flächen parallel zur Längsachse des Wasserrohres 4 sind und die an der anderen Längskante jeweils mit einer Zunge 13 versehen sind, bilden einen Längssteg innerhalb des Brennelement-Kastens 5. Die Zungen 13 greifen jeweils durch zwei Längsschlitze 18 in zwei sich gegenüberliegenden zueinander parallelen Seiten des Brennelement-Kastens 5, die parallel zu den Seiten des Wasserrohres 4 sind, an denen die Teilstege 10 festgeschweißt sind. Diese Teilstege 10 sind mit den durch die Längsschlitze 18 greifenden Zungen 13 mit dem Brennelement-Kasten 5 auf dessen Außenseite verschweißt. Der durch das Wasserrohr 4 in zwei Teilstege 10 längsgeteilte Längssteg hat wie die Teilstege 10 Abstand von den beiden anderen Seiten des Brennelement-Kastens 5.

Das Wasserrohr 4 ist an jedem Ende mit einer plattenartigen Endblende 11 verschlossen. Diese Endblenden 11 bestehen ebenfalls aus einer Zirkoniumlegierung und sind an dem Wasserrohr 4 festgeschweißt. Jede Endblende 11 hat vier Durchtrittsöffnungen 12 für Flüssigwasser, die in FIG 1 am Unterende des Wasserrohres 4 nicht erkennbar sind. Während die Endblende 11 am Oberende des Wasserrohres 4 außen mit einem zur Längsrichtung des Wasserrohres 4 parallelen Bolzen 14 versehen ist, weist die Endblende am Unterende des Wasserrohres 4 außen einen nicht erkennbaren Gewindebolzen auf, der ebenfalls zur Längsrichtung des Wasserrohres 4 parallel ist. Während der Bolzen 14 am Oberende des Wasserrohres 4 an der Innenseite des Brennelementkopfes 2 lose durch eine Durchführung 16 eines gitterförmigen Rostes dieses Brennelementkopfes 2 greift, greift der Gewinde bolzen am Unterende des Wasserrohres 4 auf der Innenseite des Brennelementfußes 3 zwar auch durch eine Durchführung eines gitterförmigen Rostes des Brennelementfußes 3, er ist aber dort mit einer nicht erkennbaren Mutter an diesem Brennelementfuß 3 festgeschraubt.

In einem Siedewasser-Kernreaktor ist das Kernreaktor-Brennelement nach FIG 1 vertikal angeordnet und wird im Brennelement-Kasten 5 von aus H$_2$O bestehendem Kühlmittel durchströmt, das durch den gitterförmigen Rost des Brennelementfußes 3 hindurch in den Brennelement-Kasten 5 ein- und durch den gitterförmigen Rost des Brennelementkopfes 2 hindurch aus dem Brennelement-Kasten 5 austritt. Während sich innerhalb des Wasserrohres 4 ausschließlich Flüssigwasser befindet, das eine erhöhte Reaktivität im Reaktorkern des Siedewasser-Kernreaktors bewirkt, befindet sich auf der Außenseite des Wasserrohres 4 im Brennelement-Kasten 5 nur am Unterende des Kernreaktor-Brennelementes mit dem Brennelementfuß 3 Flüssigwasser und am Oberende mit dem Brennelementkopf 2 Naßdampf. Einem Aufweiten des Brennelement-Kastens 5 durch erhöhten Druck innerhalb dieses Brennelement-Kastens 5 wirkt jeder Längssteg entgegen, der durch zwei zueinander parallele Teilstege 10 am Wasserrohr 4 gebildet ist.

Wie FIG 2 zeigt, brauchen die zueinander parallelen Teilstege 10, die eine Kastenseite des Brennelement-Kastens 5 mit der gegenüber befindlichen Kastenseite über das Wasserrohr 4 verbinden, nicht in derselben Ebene zu liegen, sondern jeder der beiden Teilstege 10 befindet sich in einer Ebene, die parallel zur Ebene des anderen Teilsteges ist und von dieser Abstand hat, so daß die beiden Teilstege 10 einen abgestuften Längssteg bilden.

Ferner können, wie FIG 2 zeigt, auch noch zwei weitere zueinander parallele Teilstege 10 vorgesehen sein, von denen jeder außen am Wasserrohr 4 und innen an einer Kastenseite des Brennelement-Kastens 5 befestigt ist. Auf diese Weise sind vier Teilstege 10 im Brennelement-Kasten 5 vorgesehen. Jeweils zwei Teilstege 10 bilden einen abgestuften Längssteg und befinden sich in zueinander parallelen Ebenen, die die Ebenen der beiden anderen Teilstege 10 unter einem Winkel von 90° kreuzen.

FIG 3 zeigt ein Wasserrohr 4 mit kreisrundem Querschnitt, an dem außen ebenfalls vier Teilstege 10 befestigt sind. Jeweils zwei Teilstege 10 befinden sich innerhalb des Brennelement-kastens 5 in derselben Ebene und sind jeweils an zwei sich gegenüber befindlichen Kastenseiten des Brennelement-Kastens 5 befestigt. Jeweils zwei in derselben Ebene befindliche Teilstege 10 gehören zu dem gleichen Längssteg und haben von den Kastenseiten des Brennelement-Kastens 5, zu denen sie parallel sind, unterschiedlichen Abstand.

Das Wasserrohr 4 kann in FIG 3 auch fehlen, so daß zwei Teilstege 10, die sich in derselben Ebene befinden, durch einen einteiligen Längssteg ersetzt sind. Beide miteinander einen Winkel von 90° einschließende Längsstege können in Längsrichtung des Brennelement-Kastens 5 gesehen Abstand voneinander haben oder sich berühren.

**Ansprüche**

1. Kernreaktor-Brennelement mit einem langgestreckten Brennelement-Kasten und mit Kernbrennstoff enthaltenden Brennstäben, die im Brennelement-Kasten mit Abstand voneinander und parallel zur Längsrichtung des Brennelement-Kastens angeordnet sind, sowie mit einem innerhalb des Brennelement-Kastens befindlichen, zu den Brennstäben parallelen Wasserrohr, das an einem Unterende eine Eintritts- und am einen Oberende eine Austrittsöffnung für Flüssigwasser hat, **dadurch gekennzeichnet,** daß innerhalb des Brennelement-Kastens (5) eine Kastenseite und eine gegenüber befindliche Kastenseite über einen Längssteg miteinander verbunden sind, der an diesen beiden Kastenseiten befestigt ist, Abstand von anderen Kastenseiten hat und in zwei Teilstege (10) längsgeteilt ist und daß jeder dieser Teilstege (10) außen am Wasserrohr (4) befestigt ist.

2. Kernreaktor-Brennelement nach Anspruch 1, **dadurch gekennzeichnet,** daß das Wasserrohr einen kreisrunden Querschnitt hat.

3. Kernreaktor-Brennelement nach Anspruch 1, **dadurch gekennzeichnet,** daß der Brennelement-Kasten (5) und das Wasserrohr (4) einen rechteckigen, vorzugsweise quadratischen Querschnitt haben, daß die Seiten des Querschnitts des Wasserrohres (4) parallel sind zur jeweils benachbarten Seite des Querschnitts des Brennelement-Kastens (5) und daß die Teilstege (10) an zwei sich gegenüberliegenden Seiten des Wasserrohres (4) befestigt sind.

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,X | EP-A-0 243 917 (AB ASEA-ATOM)<br>* Figuren 3,4; Seite 5, Zeile 28 - Seite 6, Zeile 13; Ansprüche 1-4,5 *<br>--- | 1-3 | G 21 C 3/32 |
| X | EP-A-0 036 142 (AB ASEA-ATOM)<br>* Figur 1; Seite 1, Zeile 24 - Seite 2, Zeile 21; Seite 5, Zeilen 7-20; Ansprüche 1,3 * | 1 | |
| Y | | 2,3 | |
| | --- | | |
| Y,D | EP-A-0 224 728 (K.W.U.)<br>* Figuren 1,2; Seite 2, Zeile 29 - Seite 3, Zeile 13 *<br>--- | 2,3 | |
| A | US-A-4 626 405 (FIELD et al.)<br>* Figuren 2,3; Spalte 1, Zeile 61 - Spalte 2, Zeile 24; Spalte 5, Zeilen 43-48; Spalte 5, Zeilen 53-56; Spalte 5, Zeilen 23-25 *<br>--- | | |
| A,D | EP-A-0 099 322 (AB ASEA-ATOM)<br>* Figuren 4,9 *<br>----- | | |

**RECHERCHIERTE SACHGEBIETE (Int. Cl.4)**

G 21 C 3/00

Der vorliegende Recherchenbericht wurde für alle Patentansprüche erstellt

| Recherchenort | Abschlußdatum der Recherche | Prüfer |
|---|---|---|
| DEN HAAG | 10-12-1988 | FRITZ S.C. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...........................................................
& : Mitglied der gleichen Patentfamilie, übereinstimmendes Dokument